# EUROPEAN PATENT SPECIFICATION

(11) **EP 4 180 304 B1**
(45) Date of publication and mention of the grant of the patent: **13.05.2026**
(21) Application number: 21838892.4
(22) Date of filing: 07.07.2021
(51) Int. Cl.: B62B 3/00, B62B 5/02, F16H 19/04, F16H 1/14, F16H 1/22

(54) **TROLLEY AND OFFSHORE STRUCTURE HAVING SAME**
WAGEN UND OFFSHORE-STRUKTUR DAMIT
CHARIOT ET STRUCTURE EN MER LE COMPORTANT

(30) Priority: 07.07.2020 KR 20200083326; 24.12.2020 KR 20200183058; 02.07.2021 KR 20210087355
(43) Date of publication of application: 17.05.2023
(73) Proprietor: Samsung Heavy Ind. Co., Ltd., Seongnam-si, Gyeonggi-do 13486 (KR)
(72) Inventor: KWON, Do Hoon, Geoje-si Gyeongsangnam-do 53261 (KR)
(74) Representative: Schmitt-Nilson Schraud Waibel Wohlfrom Patentanwälte Partnerschaft mbB
(86) International application number: PCT/KR2021/008635
(87) International publication number: WO 2022/010251

(56) References cited:
- CN-B- 106 218 680
- DE-A1- 102016 013 516
- DE-B3- 102013 003 432
- DE-B3- 102015 210 613
- JP-A- 2019 182 177
- KR-A- 20030 022 172
- KR-A- 20050 018 697
- KR-B1- 101 807 236
- KR-Y1- 200 438 679
- KR-Y1- 200 453 381
- KR-Y1- 200 466 376
- KR-Y1- 200 466 376

## Description

### Technical Field

The present invention relates to a trolley and an offshore structure having the same. More specifically, the present invention relates to a trolley freely crossing a coaming member installed in the hull or a doorsill of an enclosed area, and an offshore structure having the same.

### Background Art

In general, offshore structures are constructed or operated in the ocean, and the hull of offshore structures includes a plurality of decks that form each floor.

On the deck of the hull, various equipment or apparatuses may be installed. In order to collect fluids such as oil spilled from such equipment or apparatuses, seawater, rainwater or other contaminants or prevent the fluids from flowing to other equipment or apparatuses, coaming members of a predetermined height may be installed on the deck.

In addition, a plurality of enclosed areas that are sealed by walls, etc., are formed on the deck in the hull. Each enclosed area has an entrance with a doorsill for tightly sealing the inside, and the entrance is opened and closed by a door.

A trolley travelling on the deck to carry objects such as various materials, equipment or heavy things is provided in the hull, and the objects can be transported to a desired position using the trolley.

However, there are numerous coaming members or doorsills of enclosed areas on the deck in the hull, and thus it was inconvenient for the trolley to travel on the deck.

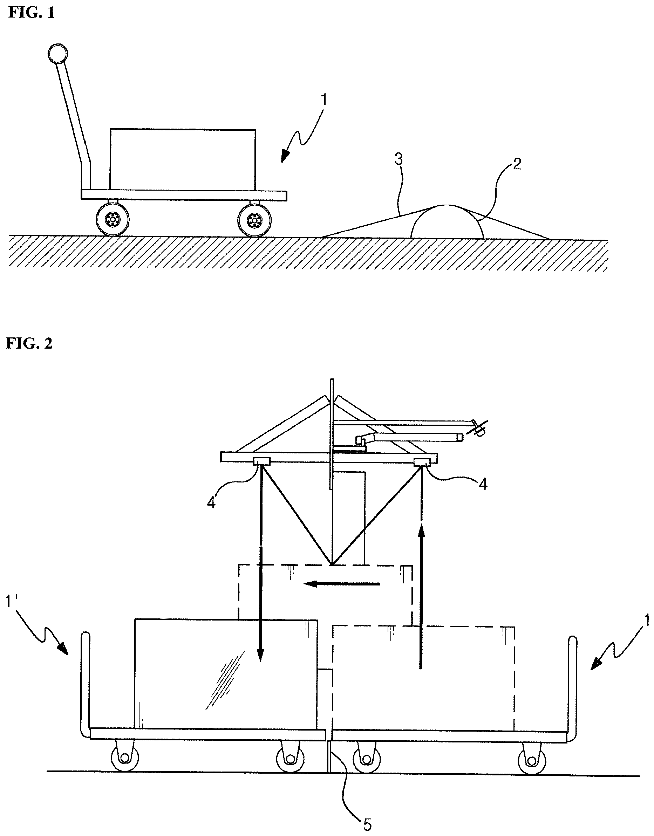

Fig. 1 and Fig. 2 illustrate the state in which a trolley 1 is operated in the offshore structure according to prior art.

Referring to Fig. 1, when a worker carries an object using a trolley 1 and encounters a coaming member 2, according to prior art, an inclined ramp 3 should be additionally installed in the coaming member 2 so that the trolley 1 could cross the coaming member 2.

Referring to Fig. 2, when a worker carries an object using a trolley 1 into an enclosed area, an inclined ramp might be installed to a doorsill 5 in the entrance of the enclosed area. However, in the case of a high doorsill 5, safety accidents might occur when a worker carries a heavy object and goes up and down the inclined ramp. Thus, at this time, the object was transported into the enclosed area using pad eyes 4 and lifting hoists (not shown).

In other words, when the doorsill 5 is high, a worker has to exert considerable power when the trolley 1 loading a heavy object climbs the uphill slope of the inclined ramp installed in the doorsill 5, and the worker has to exert considerable power when the trolley 1 descends the downhill slope in order to prevent downward acceleration. Thus, there is a risk of safety accidents. Accordingly, the heavy object was transported using the pad eyes 4 and lifting hoists (not shown).

As shown in Fig. 2, when a worker transports an object into the enclosed area using pad eyes 4 and lifting hoists (not shown), a pad eye 4 is installed in each upper portion inside and outside the door of the enclosed area. A lifting hoist (not shown) is installed in each pad eye 4. A trolley 1 loading an object is located outside the door of the enclosed area and another trolley 1' is located inside the door to face the trolley 1, with the doorsill 5 interposed therebetween. Then, the object loaded on the trolley 1 is lifted using a lifting hoist (not shown) and moved over the doorsill 5.

The object lifted by the lifting hoist (not shown) is received by a lifting hoist (not shown) installed inside the door and loaded on another trolley 1', and disconnected from the corresponding lifting hoist (not shown) to be moved into the enclosed area over the doorsill 5.

However, the way of using pad eyes 4 and lifting hoists (not shown) had problems that it takes too much time to install the pad eyes 4 or connect and disconnect the lifting hoists (not shown) to and from objects, and that heavy objects are moved while being hung in the air when passing the doorsill 5, which always causes the risk of accidents.

KR 101 807 236 B1 discloses a wheelbarrow for facilitating the transportation of a load by rotation of bogies connecting drive portions formed in the lower portion of the wheelbarrow to move the drive portions in close contact with an obstacle.

CN 106 218 680 B discloses a wheel turning type electric stair climbing delivery cart.

DE 10 2016 013516 A1 discloses a transport trolley for use on ships having the following features:
a) the transport trolley has an elongate load-bearing body and at least five wheel leg modules attached thereto, each wheel leg module having the following features: b) the wheel leg module comprises a horizontal support on the floor side with a first end and a second end and a leg part with a first end and a second end, such that the leg part is arranged with its first end centrally on the horizontal support, c) a first wheel is arranged at the first end of the horizontal support and a second wheel is arranged at the second end of the horizontal support, d) the leg part is articulated at its second end to the load-bearing body via a pivot bearing, such that the wheel leg module can exert pivoting movements in both directions of rotation starting from a driving position (F) towards obstacle folding positions (H), e) the pivoting movement of the wheel leg module towards one of the obstacle folding positions (H) takes place against the force of a pretensioned spring, f) the leg part has a compression and extension device which is provided with a damper and which acts in a vertical direction in relation to the driving position, g) the first wheel and the second wheel are each held in a wheel holder which is rotatable about a vertical axis.
DE 10 2015 210613 B3 discloses a transport trolley for transporting heavy loads over obstacles, wherein the wheels of the transport trolley are hinged.

### Disclosure

### Technical Problem

The present invention is to provide an offshore structure, and specifically a trolley freely crossing a coaming member installed in the hull or a doorsill of an enclosed area, and an offshore structure having the same.

The technical tasks to be achieved in the present invention are not limited to the technical tasks mentioned above, and other technical tasks not mentioned will be clearly understood by those of ordinary skill in the art to which the present invention belongs from the description below.

### Technical Solution

In order to solve the above problems, the present invention is defined in claim 1 and provides a trolley comprising a load plate on which an object is loaded; a front wheel part comprising a front wheel support shaft-coupled to the front of the lower portion of the load plate, and a pair of wheels provided at both ends of the front wheel support, respectively, to rotate along the rotational radius of the shaft and be selectively seated on the ground and driven, while traveling; a rear wheel part comprising a rear wheel support shaft-coupled to the rear of the lower portion of the load plate, and a pair of wheels provided at both ends of the rear wheel support, respectively, to rotate along the rotational radius of the shaft and be selectively seated on the ground and driven, while traveling; and an actuation member operatively connecting the pair of wheels of the front wheel part and the pair of wheels of the rear wheel part to be aligned with each other through a gear coupling structure and adjusting the position of at least one of the pair of wheels of the front wheel part.

Also, the present invention provides a trolley further comprising a movement auxiliary member between the load plate and the front wheel part, wherein the movement auxiliary member comprises a pinion gear provided in the shaft of the front wheel part and operatively connected with the actuation member; and a rack gear provided in the lower portion of the load plate and engaged with the pinion gear to move the load plate forward or backward by a certain distance according to the rotation of the pinion gear, wherein the pinion gear rotates in the clockwise or counterclockwise direction according to the operation of the actuation member, to move the load plate forward by a certain distance when the front wheel part crosses objects, and move the load plate backward by a certain distance when the rear wheel part crosses objects.

Also, the present invention provides a trolley, wherein the actuation member comprises an operation part operating in a manual mode with a handle or in an electric mode with a motor.

Also, the present invention provides a trolley, wherein the actuation member comprises a first gear part provided in the shaft of the rear wheel part; an operation part connected with the first gear part to rotate the first gear part; a second gear part provided in the shaft of the front wheel part; and a shaft member transmitting the rotary power of the first gear part to the second gear part.

Also, the present invention provides a trolley, wherein the first gear part comprises a first bevel gear provided in the shaft of the rear wheel part; a second bevel gear engaged with the first bevel gear and connected with the operation part; and a third bevel gear engaged with the first bevel gear and connected with the shaft member, and wherein the second gear part comprises a fourth bevel gear provided in the shaft of the front wheel part; and a fifth bevel gear engaged with the fourth bevel gear and connected with the shaft member.

Also, the present invention provides a trolley, wherein the actuation member comprises a first worm gear provided in the shaft of the rear wheel part; an operation part connected with the first worm gear to rotate the first worm gear; a second worm gear provided in the shaft of the front wheel part; and a shaft member transmitting the rotary power of the first worm gear to the second worm gear.

Also, the present invention provides a trolley, wherein the first worm gear comprises a first worm wheel provided in the shaft of the rear wheel part; and a first worm engaged with the first worm wheel, and one side of which is connected to the operation part and the other side of which is connected to the shaft member, and wherein the second worm gear comprises a second worm wheel provided in the shaft of the front wheel part; and a second worm connected to the shaft member and engaged with the second worm wheel.

Also, the present invention provides a trolley further comprising a steering member connecting between the front wheel part and the rear wheel part through a linkage structure to change the traveling direction of the front wheel part and rear wheel part by operation of a handle.

Also, the present invention provides a trolley, wherein the steering member comprises a steering handle provided in the rear of the load plate; a rear wheel linking part coupled to the lower portion of the load plate and connected with the shaft of the rear wheel part; a front wheel linking part coupled to the lower portion of the load plate and connected with the shaft of the front wheel part; and a steering linking part connecting the steering handle, rear wheel linking part and front wheel linking part, and operating the rear wheel linking part and front wheel linking part by operation of the steering handle to change the traveling direction of the front wheel part and rear wheel part.

Also, the present invention provides a trolley, wherein the steering linking part comprises a first steering frame formed integrally with the steering handle and connected with the rear wheel linking part; a second steering frame connected with the front wheel linking part; and a steering link connected between the first steering frame and the second steering frame, wherein a hub is provided in the shaft of the rear wheel part and the shaft of the front wheel part to connect each of the corresponding rear wheel linking part and front wheel linking part, wherein in the hub, the shaft of the rear wheel part or front wheel part is penetrated, and the rear wheel linking part or front wheel linking part corresponding to the outer surface is coupled.

Also, the present invention provides a trolley further comprising a first wheel drive means provided in the front wheel support to rotate at least one of the pair of wheels of the front wheel part; and a second wheel drive means provided in the rear wheel support to rotate at least one of the pair of wheels of the rear wheel part.

In order to solve the above problems, another aspect of the present invention provides an offshore structure comprising a deck on which an object is transported and installed; at least one coaming member fixedly installed on the deck to inhibit the dispersion of fluids; and a trolley passing the at least one coaming member without using inclined ramps and transporting the object to one region of the deck.

Also, in order to solve the above problems, yet another aspect of the present invention provides an offshore structure comprising an enclosed area having a door for sealing the inside and a doorsill of a predetermined height and selectively setting a positive or negative pressure thereinside; and a trolley passing the doorsill without using inclined ramps, and transporting the object to one region in the enclosed area.

### Advantageous Effects

The trolley according to an embodiment of the present invention operatively connects a front wheel part and a rear wheel part by simple operation, such that the rear wheel part can smoothly cross obstacles after the front wheel part crosses obstacles, thereby carrying an object while easily crossing obstacles such as coaming members or doorsills in the hull, without being disturbed.

Also, the offshore structure according to an embodiment of the present invention has, in the hull, a trolley capable of smoothly crossing a coaming member fixedly installed on the deck or a doorsill in an entrance of an enclosed area without installing an inclined ramp or lifting hoist, thereby safely carrying an object to a destination in the hull.

Also, thanks to the trolley capable of easily crossing obstacles such as coaming members or doorsills, a coaming member may be installed on the deck in a fixed manner, thereby effectively inhibiting the dispersion of fluids, and a doorsill in an entrance of an enclosed area may be kept, thereby easily controlling a positive or negative pressure in the enclosed area.

The effects obtainable in the present invention are not limited to the above-mentioned effects, and other effects not mentioned may be clearly understood by those of ordinary skill in the art to which the present invention pertains from the following description.

### Description of Drawings

Fig. 1 and Fig. 2 illustrate the state in which a trolley is operated in an offshore structure according to prior art;
Fig. 3 illustrates an offshore structure according to an embodiment of the present invention;
Fig. 4 illustrates an enclosed area in the offshore structure according to an embodiment of the present invention;
Fig. 5 illustrates a trolley crossing a doorsill of the enclosed area according to an embodiment of the present invention;
Fig. 6 and Fig. 7 illustrate a trolley applied to the offshore structure according to an embodiment of the present invention;
Fig. 8 illustrates the operating structure of an actuation member in the trolley according to an embodiment of the present invention;
Fig. 9 illustrates another example of the actuation member according to an embodiment of the present invention;
Fig. 10 illustrates the configuration of a shaft member in the trolley according to an embodiment of the present invention;
Fig. 11 illustrates another example of the shaft member;
Fig. 12 illustrates the configuration and operation of a movement auxiliary member in the trolley according to an embodiment of the present invention;
Fig. 13 and Fig. 14 illustrate the operation state in which the trolley crosses an obstacle according to an embodiment of the present invention;
Fig. 15 and Fig. 16 illustrate another example of a trolley according to an embodiment of the present invention;
Fig. 17 is a side view illustrating the electric trolley shown in Fig. 15 and Fig. 16;
Fig. 18 is a plan view illustrating a direction change structure in the trolley according to an embodiment of the present invention;
Fig. 19 illustrates the state in which the traveling direction of the trolley shown in Fig. 18 is changed; and
Fig. 20 illustrates another example of the direction change structure in the trolley according to an embodiment of the present invention.

### Best Mode

Hereinafter, preferred embodiments according to the present invention will be described in detail with reference to the accompanying drawings.

The detailed description set forth below in conjunction with the accompanying drawings is intended to describe exemplary embodiments of the present invention and is not intended to represent the only embodiments in which the present invention may be carried out.

In order to clearly explain the present invention in the drawings, portions that are not related to the present invention are omitted, and like reference numerals are used to refer to like elements throughout the specification.

In an embodiment of the present invention, expressions such as "or" and "at least one" may indicate one of the words listed together, or a combination of two or more.

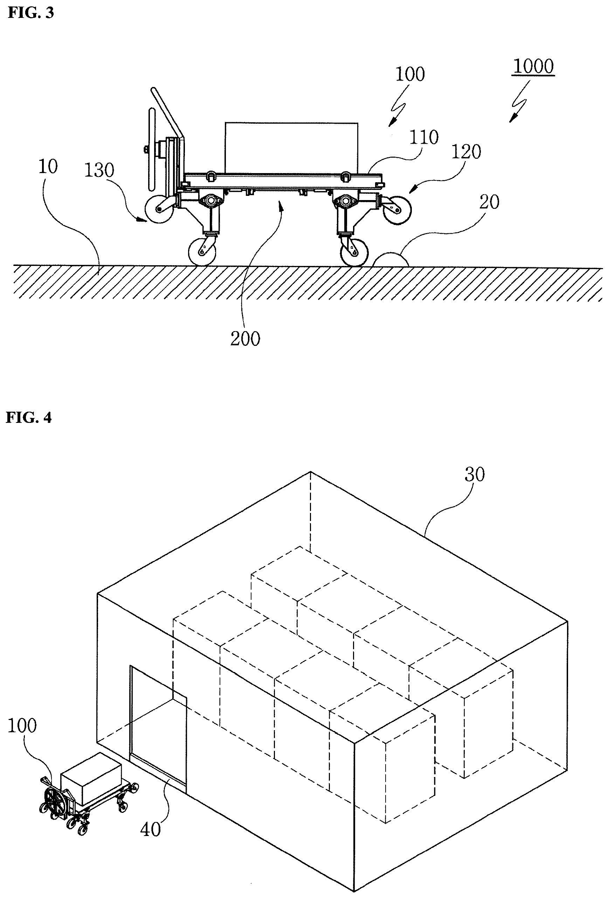

Fig. 3 illustrates an offshore structure 100 according to an embodiment of the present invention.

The offshore structure 1000 described herein may be implemented as a ship transporting goods or passengers to a destination on the sea, and may be implemented as a structure constructed on the sea to develop marine resources such as crude oil or natural gas.

When the offshore structure 1000 is implemented as a ship, it may be, for example, passenger ships, cargo ships or LNG carriers. When the offshore structure 1000 is implemented as a structure constructed on the sea, it may be, for example, floating, storage and regasification units (FSRU), floating, production, storage and offloading (FPSO) or floating LNG (FLNG).

Referring to Fig. 3, the offshore structure 1000 according to an embodiment of the present invention may comprise a deck 10, a coaming member 20 and a trolley 100.

The deck 10 may constitute each floor in the hull of the offshore structure 1000. On the deck 10, a moving path allowing persons or transport means such as the trolley 100 to travel may be formed.

In addition, on the deck 10, at least one coaming member 20 for inhibiting the dispersion of fluids may be installed.

Specifically, various equipment or apparatuses may be installed on the deck 10 of the hull. In order to collect fluids such as oil spilled from such equipment or apparatuses, seawater, rainwater or other contaminants or prevent the fluids from flowing to other equipment or apparatuses, coaming members 20 of a predetermined height may be installed on the deck 10.

Such coaming members 20 are fixedly installed on the deck 10 of the hull. Thus, when carrying a heavy object using a trolley on the deck, conventionally, inclined ramps had to be additionally installed so that the trolley crosses the coaming members.

In addition, conventionally, coaming members were detachably formed and installed on the deck according to need. However, such detachable coaming members had degraded sealing performance due to crack formation, and thus had a disadvantage of fluid leakage.

Accordingly, preferably, coaming members 20 are applied to the deck 10 of the hull in a fixed manner. To this end, the present embodiment comprises a trolley 100 capable of easily crossing the coaming members 20 without installing inclined ramps, thereby freely installing fixed-type coaming members 20 on the deck 10.

The trolley 100 of the present embodiment may load an object on a load plate 110 and travel along a moving path on the deck 10. The trolley may operatively connect a front wheel part 120 provided in the front of the load plate 110 and a rear wheel part 130 provided in the rear thereof using an actuation member 200 during traveling, allowing a pair of wheels provided in each of the front wheel part 120 and rear wheel part 130 to be lifted off the ground by turns, thereby freely crossing the coaming member 20 on the deck 10 of the hull.

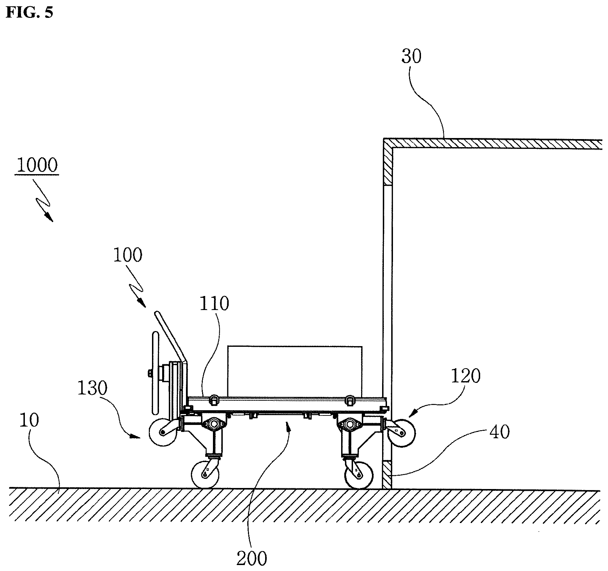

Fig. 4 illustrates an enclosed area 30 in the offshore structure 1000 according to an embodiment of the present invention, and Fig. 5 illustrates a trolley 100 crossing a doorsill 40 of the enclosed area 30 according to an embodiment of the present invention.

Referring to Fig. 4 and Fig. 5, the enclosed area 30 may be provided in the hull of the offshore structure 1000.

The enclosed area 30, an area requiring sealing in the hull, has a door (not shown) for sealing the inside and a doorsill 40 of a predetermined height, and may be configured to selectively set a positive or negative pressure thereinside.

Specifically, the enclosed area 30 may be a space sealed by walls, etc., on the deck 10 of the hull, have an entrance with a doorsill 40 for tightly sealing the inside, and be configured to open and close the entrance by a door (not shown).

Here, the doorsill 40 formed at the lower portion of the entrance may be removed to move the trolley 100 into the enclosed area 30. When the doorsill 40 is removed, however, the sealing performance is degraded, and accordingly, it is difficult to control a positive or negative pressure in the enclosed area 30.

As an example, a dangerous area such as a battery room in the enclosed area 30 of the hull should be maintained at a negative pressure (a pressure lower than atmospheric pressure), and all the rest of the enclosed area 30 should be maintained at a positive pressure (a pressure higher than atmospheric pressure). When a doorsill 40 is not provided in the enclosed area 30, the entrance can hardly be tightly closed by a door (not shown). Thus, it is difficult to control a positive or negative pressure in the enclosed area 30.

Accordingly, preferably, the doorsill 40 is provided in all the enclosed areas 30 in the hull of the offshore structure 1000.

In addition, in carrying an object into the enclosed area 30, conventionally, inclined ramps were installed to cross a doorsill of the enclosed area using a trolley. However, when a worker carries a heavy object and crosses the inclined ramps, the worker's safety might be in danger. Thus, in such case, the object was transported into the enclosed area using pad eyes and lifting hoists (not shown), instead of a trolley.

However, as to the way of using pad eyes and lifting hoists, it takes too much time to install the pad eyes or connect and disconnect the lifting hoists to and from the object, and there is the risk of accidents because heavy objects are moved while being hung in the air when passing the doorsill.

Accordingly, the present embodiment uses a trolley 100 capable of safely crossing the doorsill 40 of the enclosed area 30 while carrying an object and traveling, thereby not requiring installation of inclined ramps or lifting hoists and significantly reducing the occurrence of worker's safety accidents.

Referring to Fig. 5, in carrying an object into the enclosed area 30, the trolley 100 according to the present embodiment may operatively connect a front wheel part 120 provided in the front of the load plate 110 and a rear wheel part 130 provided in the rear thereof using an actuation member 200 during traveling, while loading the object on a load plate 110, allowing a pair of wheels provided in each of the front wheel part 120 and rear wheel part 130 to be lifted off the ground by turns, thereby smoothly crossing the doorsill 40 of the enclosed area 30.

The trolley 100 of the present embodiment may freely cross obstacles such as coaming members 20 or doorsills 40 on the deck 10 of the hull, thereby reducing the time incurred to transport an object and also ensuring worker's safety. Further, the trolley may easily take a lifting means such as an elevator when transporting an object to the deck 10 on another floor, thereby safely carrying the object to a destination.

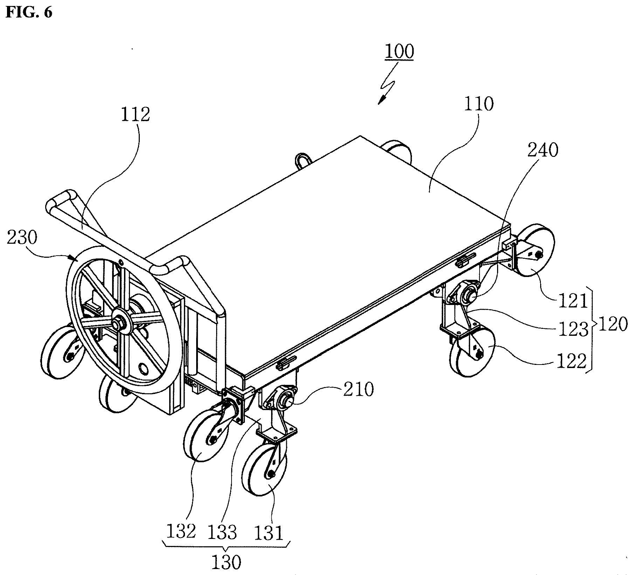

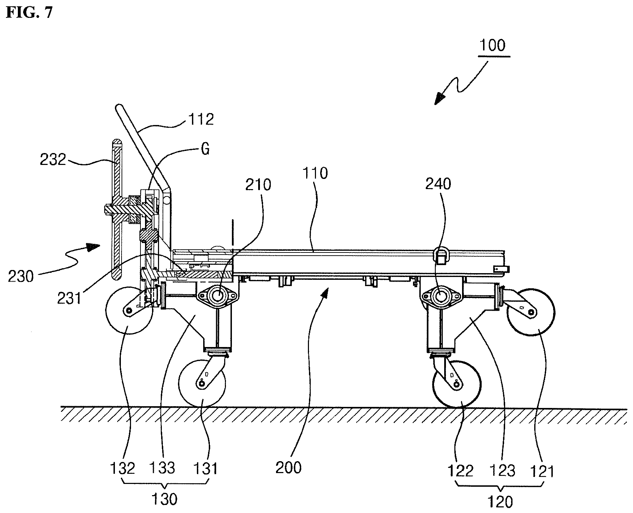

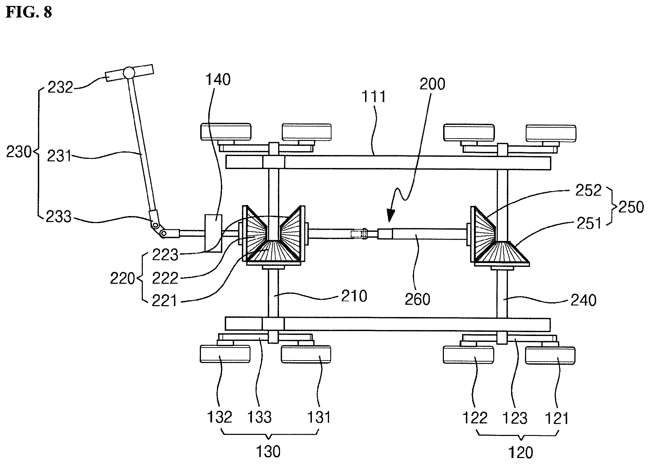

Fig. 6 and Fig. 7 illustrate a trolley 100 applied to the offshore structure 1000 according to an embodiment of the present invention, and Fig. 8 illustrates the operating structure of an actuation member 200 in the trolley 100 according to an embodiment of the present invention.

Referring to Fig. 6 to Fig. 8, the trolley 100 according to the present embodiment may comprise a load plate 110, a front wheel part 120, a rear wheel part 130 and an actuation member 200.

The load plate 110 is a plate having a flat body shape for carrying an object, and an object may be loaded thereon.

In addition, a fixed frame 111 in which the front wheel part 120 and rear wheel part 130 described below are installed may be provided in the lower portion of the load plate 110.

In addition, a handle bar 112 protruding upwardly may be provided in the rear of the load plate 110 for a worker to hold, and a worker may hold the handle bar 112 and move the trolley 100.

The front wheel part 120 may be shaft-coupled to the front of the lower portion of the load plate 110 and be rollable on the ground while supporting the load plate 110.

The front wheel part 120 has a pair of wheels 121, 122 which are disposed at both sides of the front of the lower portion of the load plate 110 and operated to rotate about a shaft and be lifted off the ground by turns, and thus may be configured to cross obstacles such as coaming members 20 or doorsills 40 protruding from the ground of the deck 10.

Specifically, a second rotating shaft 240 may be provided at the front side of the lower portion of the load plate 110. The front wheel part 120 may be coupled to each of both ends of the second rotating shaft 240 and disposed at both sides of the front of the lower portion of the load plate 110.

In addition, each front wheel part 120 may comprise a front wheel support 123 bent at a predetermined angle and having a center fixed to the second rotating shaft 240, and a first wheel 121 and a second wheel 122 provided at both ends of the front wheel support 123, respectively.

Here, the front wheel support 123 may be formed in a"¬" shape in which the center thereof is bent, and the bent center may be fixed to the second rotating shaft 240.

The first wheel 121 may be provided in the front end of the front wheel support 123, and the second wheel 122 may be provided in the rear end thereof.

The front wheel part 120 having such configuration may, alternatively, lift the first wheel 121 of the front wheel support 123 and support the second wheel 122 on the ground, or lift the second wheel 122 and support the first wheel 121 on the ground, by rotating the second rotating shaft 240 in the clockwise or counterclockwise direction.

The rear wheel part 130 may be shaft-coupled to the rear of the lower portion of the load plate 110 and be rollable on the ground while supporting the load plate 110 together with the front wheel part 120.

The rear wheel part 130 may have the same structure as the front wheel part 120, and may be configured to cross obstacles using a pair of wheels 131, 132 operated to be lifted off the ground by turns.

Specifically, a first rotating shaft 210 may be provided at the rear side of the lower portion of the load plate 110. The rear wheel part 130 may be coupled to each of both ends of the first rotating shaft 210 and disposed at both sides of the rear of the lower portion of the load plate 110.

In addition, each rear wheel part 130 may comprise a rear wheel support 133 bent at a predetermined angle and having a center fixed to the first rotating shaft 210, and a third wheel 131 and a fourth wheel 132 provided at both ends of the rear wheel support 133, respectively.

Here, the rear wheel support 133 may be formed in the same shape as the front wheel support 123. The third wheel 131 may be provided in the front end of the rear wheel support 133, and the fourth wheel 132 may be provided in the rear end thereof.

The rear wheel part 130 may also, alternatively, lift the third wheel 131 of the rear wheel support 133 and support the fourth wheel 132 on the ground, or lift the fourth wheel 132 and support the fourth wheel 131 on the ground, by rotating the first rotating shaft 210.

As an example, the front wheel support 123 and rear wheel support 133 described above in the present embodiment may be formed to have an angle of about 75° to 90°, and may be inclined at an angle of about 15° to 20° with respect to the rotating shaft while supporting a pair of wheels. Thereby, a pair of wheels may easily rotate along the rotational radius of the rotating shaft when the rotating shaft rotates.

The trolley 100 of the present embodiment having the front wheel part 120 and rear wheel part 130 may travel, at normal time, by which the second wheel 122 of the front wheel part 120 and the third wheel 131 of the rear wheel part 130 are supported on the ground. When crossing obstacles, the trolley may cross the obstacles by rotating the second rotating shaft 240 and first rotating shaft 210 through an actuation member 200 to be described below, such that the second wheel 122 of the front wheel part 120 is switched to the first wheel 121, and at the same time, the third wheel 131 of the rear wheel part 130 is switched to the fourth wheel 132. Detailed description thereon will be described below.

The actuation member 200 links the front wheel part 120 and rear wheel part 130 through a gear coupling structure and operatively connects the front wheel part 120 and rear wheel part 130 to cross obstacles.

Specifically, referring to Fig. 7 and Fig. 8, the actuation member 200 may comprise a first rotating shaft 210 connected with the rear wheel part 130, a first gear part 220 provided in the first rotating shaft 210, an operation part 230 for rotating the first gear part 220, a second rotating shaft 240 connected with the front wheel part 120, a second gear part 250 provided in the second rotating shaft 240, and a shaft member 260 transmitting the rotary power of the first gear part 220 to the second gear part 250.

Here, the front wheel part 120 may be coupled to each of both ends of the second rotating shaft 240, and the rear wheel part 130 may be coupled to each of both ends of the first rotating shaft 210, as described above.

In addition, the first gear part 220 may comprise a first bevel gear 221 provided on the first rotating shaft 210, a second bevel gear 222 engaged with the first bevel gear 221 and connected with the operation part 230, and a third bevel gear 223 engaged with the first bevel gear 221 and connected with the shaft member 260.

In addition, the operation part 230 may comprise a control bar 231 connected with the second bevel gear 222 and a handle 232 provided at the end of the control bar 231.

As an example, as shown in Fig. 7, a gear box G may be connected to the control bar 231, and a round-shaped handle 232 may be connected to the upper portion of the gear box G.

Here, the handle 232 and control bar 231 may be connected to each other by a gear coupling structure in the gear box G. Accordingly, when turning the handle 232, rotary power is transmitted to the control bar 231 through the gear box G, to actuate the first gear part 220.

In addition, the gear box G is disposed at the side of the handle 232 in the upper portion of the load plate 110. Thus, a worker may control the handle bar 112 in the upper portion of the gear box G as well as the handle 232.

As another example, as shown in Fig. 8, a joint member 233 that is foldable, such as a double universal joint, may be provided on the control bar 231, and the control bar 231 may be folded by the joint member. The folded control bar 231 may be disposed at the side of the handle bar 112 in the upper portion of the load plate 110, and thus a worker may control the handle 232 provided at the end of the control bar 231 as well as the handle bar 112.

The second gear part 250 may comprise a fourth bevel gear 251 provided on the second rotating shaft 240 and a fifth bevel gear 252 engaged with the fourth bevel gear 251 and connected with the shaft member 260.

The shaft member 260 is configured to transmit the rotary power of the first gear part 220 to the second gear part 250, one end of which may be connected to the third bevel gear 223 and the other end of which may be connected to the fifth bevel gear 252.

By this configuration, during a process of operating the front wheel part 120 and rear wheel part 130 by the actuation member 200, when a worker controls the handle 232 to rotate the control bar 231, the second bevel gear 222 connected with the control bar 231 rotates the first bevel gear 221, thereby rotating the first rotating shaft 210. Accordingly, the third wheel 131 or fourth wheel 132 of the rear wheel part 130 may be switched to be supported on the ground, through the first rotating shaft 210.

Simultaneously, the first bevel gear 221 on the first rotating shaft 210 rotates the third bevel gear 223, thereby rotating the shaft member 260. Thereby, the fifth bevel gear 252 connected with the shaft member 260 rotates the fourth bevel gear 251 on the second rotating shaft 240. Accordingly, the second rotating shaft 240 rotates to switch the first wheel 121 or second wheel 122 of the front wheel part 120 to be supported on the ground.

Here, an irreversible locking device 140 is installed in the second bevel gear 222, such that the second bevel gear 222 rotates only when the control bar 231 rotates by the handle 232, to rotate the first, third, fifth and fourth bevel gears 221, 223, 251, 252, thereby rotating the first and second rotating shafts 210, 240. When the control bar 231 does not rotate, the first and second rotating shafts 210, 240 do not rotate.

In addition, the gear coupling structure described above rotates the second rotating shaft 240 and first rotating shaft 210 in opposite directions through the plurality of bevel gears 221, 222, 223, 251, 252. Thus, the front wheel part 120 and rear wheel part 130 may rotate in opposite directions.

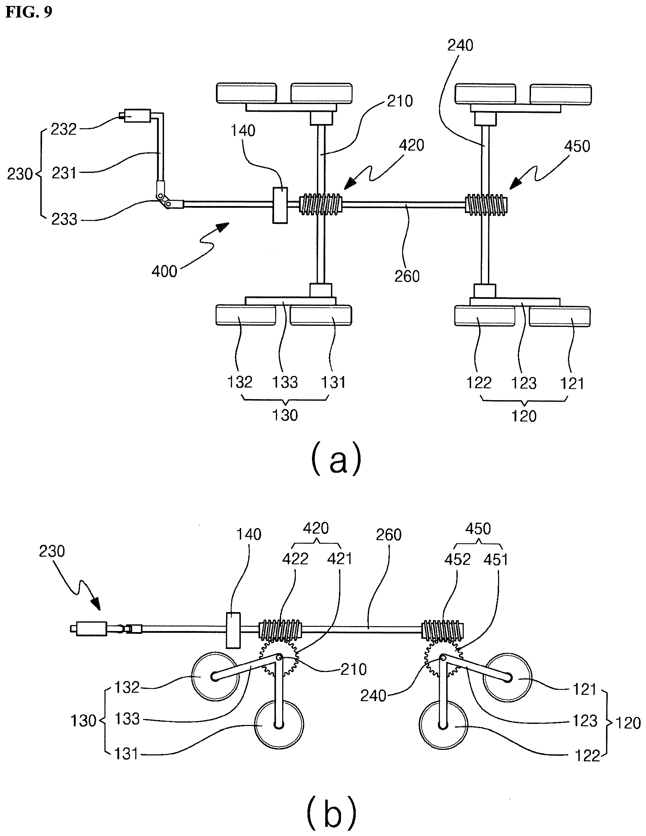

Fig. 9 illustrates another example of the actuation member 400 according to an embodiment of the present invention.

Referring to Fig. 9, the front wheel part 120 and rear wheel part 130 of the trolley may be operatively connected to each other by the actuation member 400 formed of a gear coupling structure using a worm gear.

Specifically, the actuation member 400 of the present embodiment may comprise a first rotating shaft 210 connected with the rear wheel part 130, a first worm gear 420 provided in the first rotating shaft 210, an operation part 230 for rotating the first worm gear 420, a second rotating shaft 240 connected with the front wheel part 120, a second worm gear 450 provided in the second rotating shaft 240, and a shaft member 260 transmitting the rotary power of the first worm gear 420 to the second worm gear 450.

The rear wheel part 130 may be coupled to each of both ends of the first rotating shaft 210, and the front wheel part 120 may be coupled to each of both ends of the second rotating shaft 240.

The first worm gear 420 may comprise a first worm wheel 421 provided on the first rotating shaft 210, and a first worn 422 engaged with the first worm wheel 421, and one side of which is connected to the operation part 230 and the other side of which is connected to the shaft member 260.

The operation part 230 may comprise a control bar 231 connected with the first worm 422, and a handle 232 provided at the end of the control bar 231.

The second worm gear 450 may comprise a second worm wheel 451 provided on the second rotating shaft 240, and a second worm 452 connected to the shaft member 260 and engaged with the second worm wheel 451.

Here, the screw formed on the second worm 452 may be formed in the opposite direction to the screw formed on the first worm 422.

The shaft member 260 for transmitting the rotary power of the first worm gear 420 to the second worm gear 450 is connected between the first worm 422 and the second worm 452, and transmits the rotary power of the first worm 422 to the second worm 452 when the first worm 422 rotates by the operation part 230.

By this configuration, during a process of operating the front wheel part 120 and rear wheel part 130 by the actuation member 400, when a worker operates the handle 232 to rotate the control bar 231, the first worm 422 connected with the control bar 231 rotates the first worm wheel 421, thereby rotating the first rotating shaft 210. Accordingly, the third wheel 131 or fourth wheel 132 of the rear wheel part 130 may be switched to be supported on the ground or lifted off the ground through the first rotating shaft 210.

Simultaneously, as the first worm 422 rotates, the shaft member 260 connected to the first worm 422 rotates, enabling the second worm 452 connected to the shaft member 260 to rotate the second worm wheel 451. Accordingly, the second rotating shaft 240 rotates to switch the first wheel 121 or second wheel 122 of the front wheel part 120 to be supported on the ground or lifted off the ground.

Here, an irreversible locking device 140 is installed in the control bar 231 connected with the first worm 422, such that the first worm gear 420 rotates only when the control bar 231 rotates by the handle 232, to rotate the second worm gear 450, thereby rotating the first and second rotating shafts 210, 240. When the control bar 231 does not rotate, the first and second rotating shafts 210, 240 do not rotate.

According to the gear coupling structure described above, the screw formed on the first worm 422 and the screw formed on the second worm 452 are formed in opposite directions. Thus, when the first worm wheel 421 rotates in the counterclockwise direction through the first worm 422 by operating the handle 232 of the operation part 230, the second worm 452 may rotate the second worm wheel 451 in the clockwise direction. Accordingly, the rear wheel part 130 connected with the first worm wheel 421 through the first rotating shaft 210 may rotate in the counterclockwise direction, and the front wheel part 120 connected with the second worm wheel 451 through the second rotating shaft 240 may rotate in the clockwise direction.

In addition, when the first worm wheel 421 rotates in the clockwise direction through the first worm 422 by operating the handle 232 of the operation part 230 in the opposite direction, the second worm 452 rotates the second worm wheel 451 in the counterclockwise direction. Accordingly, the rear wheel part 130 may rotate in the clockwise direction, and the front wheel part 120 may rotate in the counterclockwise direction.

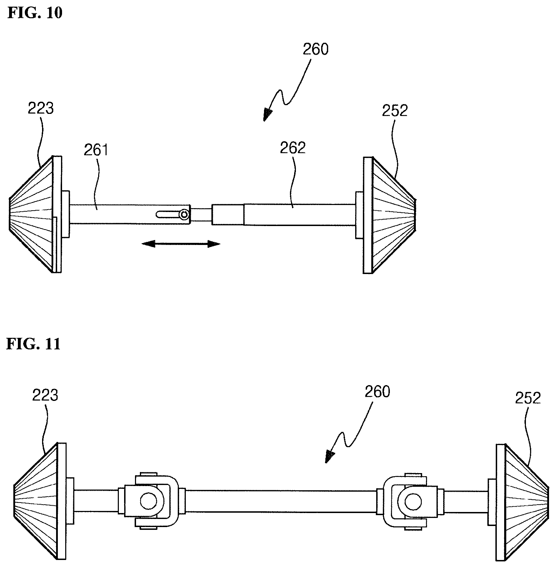

Fig. 10 illustrates the configuration of a shaft member 260 in the trolley 100 according to an embodiment of the present invention. The shaft member 260 connected between the second rotating shaft 240 of the front wheel part 120 and the first rotating wheel 210 of the rear wheel part 130 may be expandable or contractible as the front wheel part 120 and rear wheel part 130 are operated to be moved away from or close to each other in the load plate 110, while rotating in opposite directions.

Specifically, referring to Fig. 10, as an example, the shaft member may be configured such that a pair of first and second shafts 261, 262 are telescopically coupled to each other. Accordingly, the shaft member 260 may be expandable.

Fig. 11 illustrates another example of the shaft member. The shaft member 260 may be expandable or contractible with a slip joint structure.

The trolley 100 according to the present embodiment may further comprise a movement auxiliary member 300 for assisting the obstacle crossing operation of the front wheel part 120 and rear wheel part 130 by being operatively connected with the actuation member 200 operating the front wheel part 120 and rear wheel part 130 to move the load plate 110 forward or backward by a certain distance.

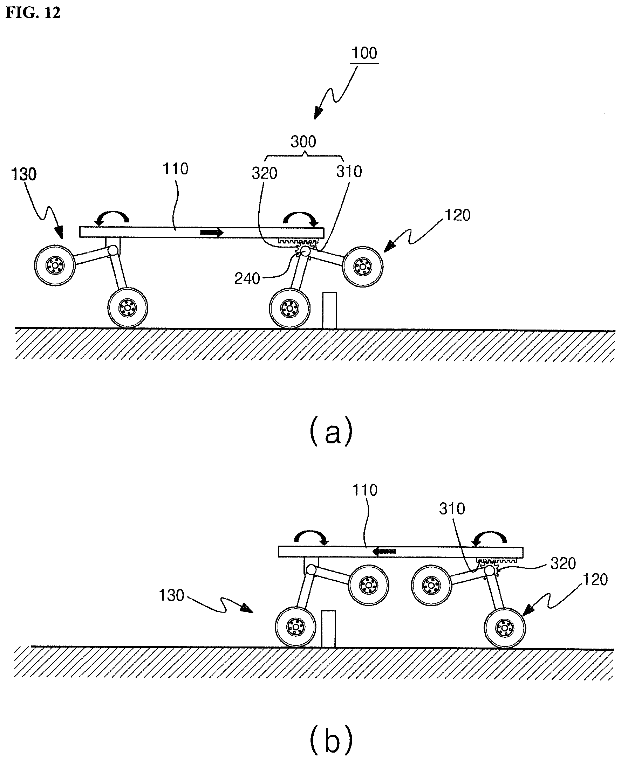

Fig. 12 illustrates the configuration and operation of a movement auxiliary member 300 in the trolley 100 according to an embodiment of the present invention.

Referring to Fig. 12, the movement auxiliary member 300 may comprise a rack gear 310 provided in the front of the lower portion of the load plate 110, and a pinion gear 320 provided in the second rotating shaft 240 and engaged with the rack gear 310.

Specifically, when the second rotating shaft 240 of the front wheel part 120 rotates in the clockwise direction by the actuation member 200, the pinion gear 320 on the second rotating shaft 240 rotates in the clockwise direction. Thereby, the movement auxiliary member 300 may move the load plate 110 forward by a certain distance through the rack gear 310 engaged therewith.

In addition, when the second rotating shaft 240 of the front wheel part 120 rotates in the counterclockwise direction by the actuation member 200, the pinion gear 320 on the second rotating shaft 240 rotates in the counterclockwise direction. Thereby, the movement auxiliary member 300 may move the load plate 110 backward by a certain distance through the rack gear 310 engaged therewith.

The movement auxiliary member 300 moves the load plate 110 forward when the forward wheel part 120 crosses obstacles, which causes a greater moment on the front wheel part 120 than on the rear wheel part 130, thereby allowing the front wheel part 120 to smoothly cross obstacles.

In addition, the movement auxiliary member 300 moves the load plate 110 backward when the rear wheel part 130 crosses obstacles after the forward wheel part 120 crosses obstacles, which causes a greater moment on the rear wheel part 130 than on the front wheel part 120, thereby allowing the rear wheel part 130 to smoothly cross obstacles.

The embodiment above describes an example in which the movement auxiliary member 300 is provided at the side of the front wheel part 120 in the load plate 110, but the movement auxiliary member 300 may be provided at the side of the rear wheel part 130.

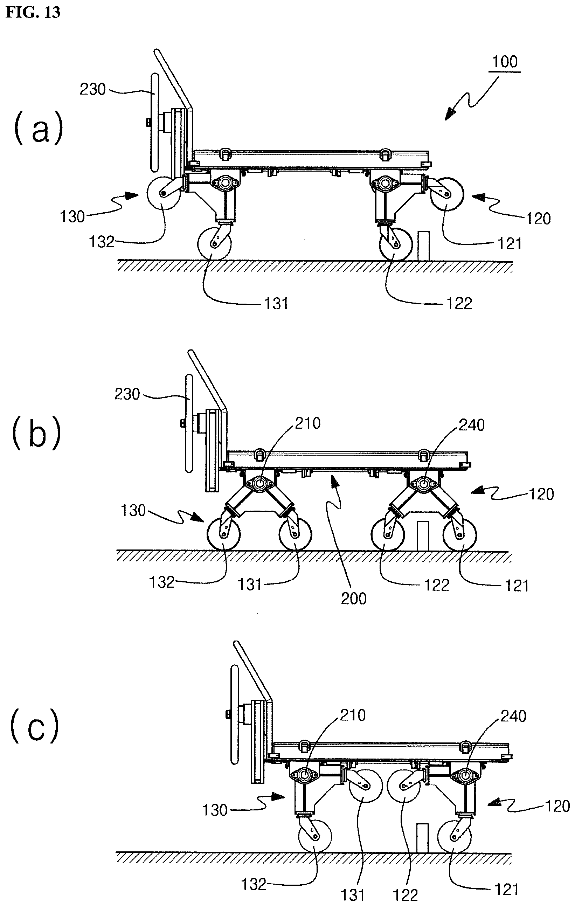

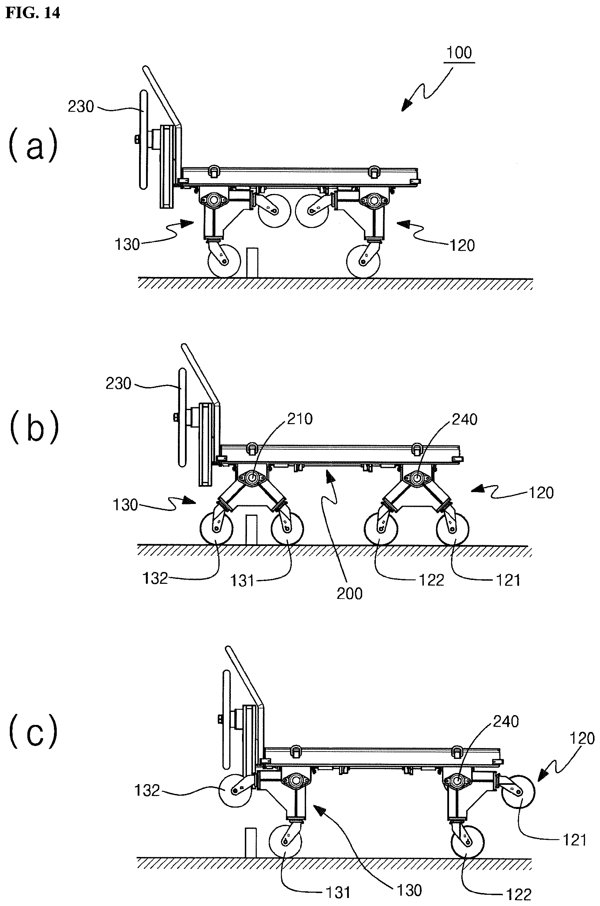

Fig. 13 and Fig. 14 illustrate the operation state in which the trolley 100 crosses an obstacle according to an embodiment of the present invention.

As an example, the trolley 100 of the present embodiment may carry objects such as materials or equipment while traveling on the deck 10 in the hull of the offshore structure 1000, and smoothly cross obstacles such as coaming members 20 or doorsills 40 in the hull by simple operation without being disturbed, thereby carrying objects more safely.

Referring to Fig. 13, the trolley 100 according to the present embodiment may travel, at normal time, by which the first wheel 121 of the front wheel part 120 and the fourth wheel 132 of the rear wheel part 130 are lifted off the ground, and the second wheel 122 of the front wheel part 120 and the third wheel 131 of the rear wheel part 130 are supported on the ground.

In addition, when a worker encounters an obstacle such as a coaming member 20 or doorsill 40 in front of the ground supported second wheel 122 of the front wheel part 120, while moving the trolley 100, he controls the operation part 230 to operate the actuation member 200 (see Fig. 8), such that the second rotating shaft 240 rotates in the clockwise direction through the second gear part 250 (see Fig. 8) at the side of the front wheel part 120, and accordingly the first wheel 121 and second wheel 122 of the front wheel part 120 may rotate in the clockwise direction along the rotational radius of the second rotating shaft 240.

During this process, the first wheel 121 may cross the obstacle on the ground and be supported on the ground, and the second wheel 122 positioned in the rear of the first wheel 121 may be lifted from the ground.

Simultaneously, the first gear part 220 (see Fig. 8) connected with the second gear part 250 (see Fig. 8) rotates the first rotating shaft 210 at the side of the rear wheel part 130. Accordingly, the third wheel 131 and fourth wheel 132 of the rear wheel part 130 may rotate in the counterclockwise direction along the rotational radius of the first rotating shaft 210.

In addition, referring to Fig. 14, when the front wheel part 120 crosses an obstacle and then the rear wheel part 130 crosses the obstacle, the worker controls the operation part 230 to operate the actuation member 200 (see Fig. 8), such that the first rotating shaft 210 rotates in the clockwise direction through the first gear part 220 (see Fig. 8). Accordingly, the third wheel 131 and fourth wheel 132 of the rear wheel part 130 may rotate in the clockwise direction along the rotational radius of the first rotating shaft 210.

During this process, the third wheel 131 may cross the obstacle on the ground and be supported on the ground, and the fourth wheel 132 positioned in the rear of the third wheel 131 may be lifted from the ground.

Simultaneously, the second gear part 250 (see Fig. 8) operatively connected with the first gear part 220 (see Fig. 8) rotates the second rotating shaft 240 at the side of the front wheel part 120. Accordingly, the first wheel 121 and second wheel 122 of the front wheel part 120 may rotate in the counterclockwise direction along the rotational radius of the second rotating shaft 240.

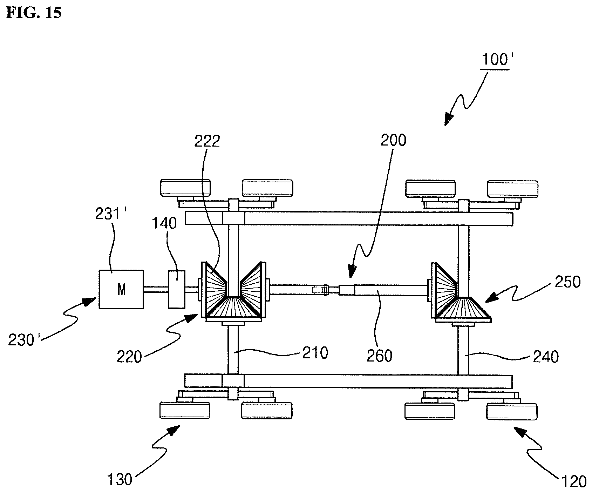

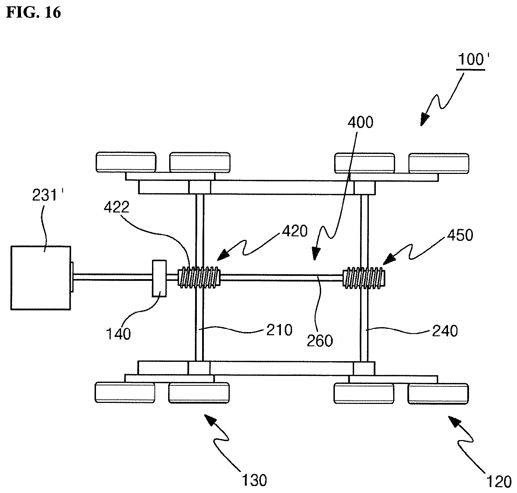

Fig. 15 and Fig. 16 illustrate another example of a trolley 100' according to an embodiment of the present invention.

Referring to Fig. 15 and Fig. 16, the trolley 100' according to the present embodiment may operate in an electric mode, such that an operation part 230' provided in an actuation member 200, 400 uses a motor to operate the actuation member 200, 400.

Specifically, as shown in Fig. 15, the operation part 230' of the present embodiment may comprise a drive motor 231' connected with a second bevel gear 222 of a first gear part 220 and a button (not shown) for actuating the drive motor 231'. The drive motor 231' may include a step motor capable of controlling the rotational direction and rpm of a shaft, etc.

Accordingly, in the present embodiment, a worker may rotate the shaft of the drive motor 231' in the clockwise or counterclockwise direction by pressing the button (not shown), without having to operate a handle manually. Thereby, the first gear part 220 and second gear part 250 are operatively connected to operate the front wheel part 120 and rear wheel part 130.

As shown in Fig. 16, as another example, the operation part 230' may comprise a drive motor 231' connected with a first worm 422 of a first worm gear 420 and a button (not shown) for actuating the drive motor 231'.

A worker may rotate the shaft of the drive motor 231' in the clockwise or counterclockwise direction by pressing the button (not shown). Thereby, the first worm gear 420 and second worm gear 450 are operatively connected to operate the front wheel part 120 and rear wheel part 130.

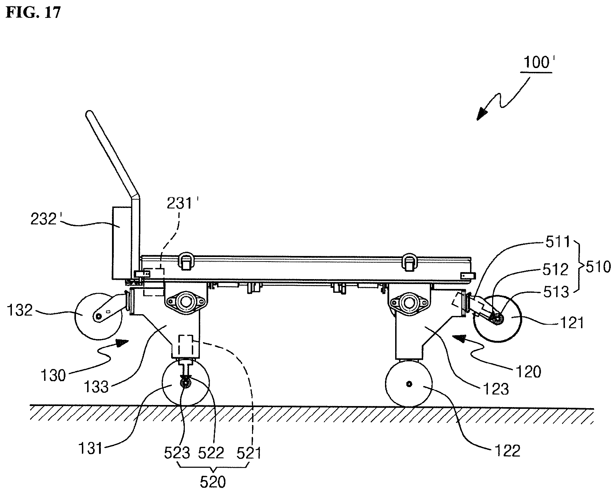

Fig. 17 is a side view illustrating the electric trolley 100' shown in Fig. 15 and Fig. 16. Referring to Fig. 17, the operation part 230' may comprise a control box 232' having a button (not shown) for actuating a drive motor 231'.

Accordingly, in the present embodiment, a worker may rotate the shaft of the drive motor 231' in the clockwise or counterclockwise direction by pressing the button provided in the control box 232', without having to operate a handle manually. Thereby, the first gear part 220 and second gear part 250 shown in Fig. 15 are operatively connected, or the first worm gear 420 and second worm gear 450 shown in Fig. 16 are operatively connected, to operate the front wheel part 120 and rear wheel part 130.

The trolley 100' having the configuration described above operates the front wheel part 120 and rear wheel part 130 by the drive motor 231'. Thus, the trolley 100' may more easily operate the front wheel part 120 and rear wheel part 130 than a trolley operated manually, to cross objects, when loading and carrying a heavy object.

In addition, referring to Fig. 17, the front wheel part 120 and rear wheel part 130 may have wheel drive means 510, 520, respectively, for rotating the wheels electrically.

The wheel drive means 510, 520 may be provided in the front wheel support 123 of the front wheel part 120 and in the rear wheel support 133 of the rear wheel part 130, respectively. As an example, a first wheel drive means 510 may be provided in the front wheel support 123 to rotate the first wheel 121, and a second wheel drive means 520 may be provided in the rear wheel support 133 to rotate the third wheel 131.

In this case, as shown in Fig. 17, when the second wheel 122 of the front wheel part 120 and the third wheel 131 of the rear wheel part 130 are supported on the ground, the trolley 100 may be moved by rotating the third wheel 131 using the second wheel drive means 520 provided in the rear wheel support 133.

When the wheels of the front wheel part 120 and the rear wheel part 130 are switched by the actuation member 200, such that the first wheel 121 of the front wheel part 120 and the fourth wheel 132 of the rear wheel part 130 are supported on the ground, the trolley 100 may be moved by rotating the first wheel 121 using the first wheel drive means 510 provided in the front wheel support 123.

The embodiment above describes that the wheel drive means 510, 520 are provided to operate the first wheel 121 of the front wheel part 120 and the third wheel 131 of the rear wheel part 130; however, the prevent invention is not necessarily limited to the present embodiment. The wheel drive means 510, 520 may be provided to operate the second wheel 122 of the front wheel part 120 and the fourth wheel 132 of the rear wheel part 130, or the wheel drive means 510, 520 may be provided to operate all of the first to fourth wheels 121, 122, 131, 132.

As an example, the first wheel drive means 510 may comprise a first electric motor 511 provided in the front wheel support 123, a first auxiliary bevel gear 512 shaft-coupled to the first electric motor 511, and a second auxiliary bevel gear 513 shaft-coupled to at least one of the first wheel 121 and second wheel 122 and engaged with the first auxiliary bevel gear 512.

The second wheel drive means 520 may comprise a second electric motor 521 provided in the rear wheel support 133, a third auxiliary bevel gear 522 shaft-coupled to the second electric motor 521, and a fourth auxiliary bevel gear 523 shaft-coupled to at least one of the third wheel 131 and fourth wheel 132 and engaged with the third auxiliary bevel gear 522.

In the present embodiment, the trolley 100' may be moved by the power of the electric motors generated by rotating the wheels of the front wheel part 120 and rear wheel part 130 using the first and second wheel drive means 510, 520 which include electric motors and auxiliary bevel gears.

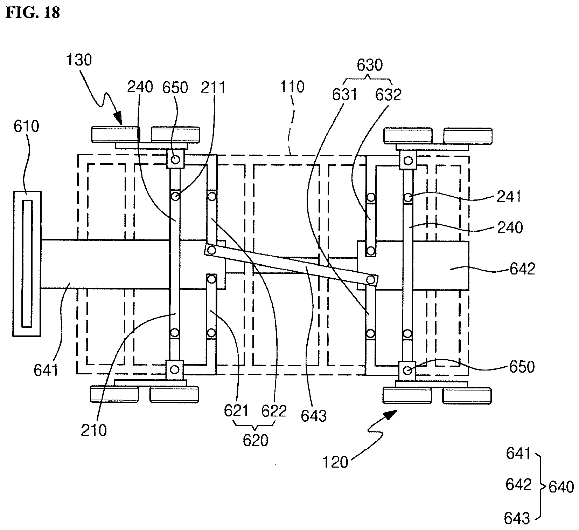

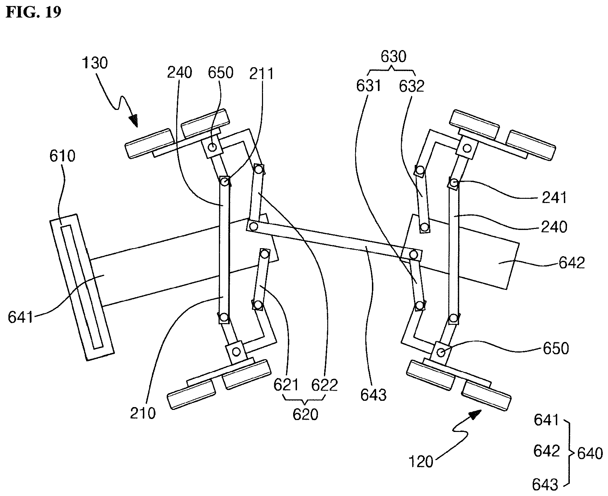

Fig. 18 is a plan view illustrating a direction change structure in the trolley 100 according to an embodiment of the present invention, and Fig. 19 illustrates the state in which the traveling direction of the trolley 100 shown in Fig. 18 is changed.

Referring to Fig. 18 and Fig. 19, the trolley 100 of the present embodiment may comprise a steering member 600 capable of changing the traveling direction of the trolley through a linkage structure.

As an example, the steering member 600 connects the front wheel part 120 and rear wheel part 130 through a linkage structure, and may change the traveling direction of the front wheel part 120 and rear wheel part 130 by operation of a steering handle 610.

Specifically, the steering member 600 may comprise a steering handle 610 provided in the rear of the load plate 110, a rear wheel linking part 620 coupled to the lower portion of the load plate 110 and connected with both sides of the first rotating shaft 210, a front wheel linking part 630 coupled to the lower portion of the load plate 110 and connected with both sides of the second rotating shaft 240, and a steering linking part 640 connecting the steering handle 610, rear wheel linking part 620 and front wheel linking part 630 and operating the rear wheel linking part 620 and front wheel linking part 630 by operation of the steering handle 610 to change the traveling direction of the front wheel part 120 and rear wheel part 130.

The steering linking part 640 may comprise a first steering frame 641 formed integrally with the steering handle 610 and connected with the rear wheel linking part 620, a second steering frame 642 connected with the front wheel linking part 630, and a steering link 643 connected between the first steering frame 641 and the second steering frame 642.

Specifically, the steering handle 610 protrudes upwardly in the rear of the load plate 110, and may allow a worker to hold the steering handle 610 to move the trolley 100.

In the present embodiment, universal joints 211, 241 may be provided on the left and right sides of the first rotating shaft 210 and second rotating shaft 240, enabling to change the direction of the front wheel part 120 provided at both sides of the first rotating shaft 210 and the rear wheel part 130 provided at both sides of the second rotating shaft 240.

The rear wheel linking part 620 may be connected with both sides of the first rotating shaft 210 provided with the rear wheel parts 130, and the front wheel linking part 630 may be connected with both sides of the second rotating shaft 240 provided with the front wheel parts 120.

A hub 650 may be provided in each of the connection sites between the first rotating shaft 210 and the rear wheel linking part 620 and the connection sites between the second rotating shaft 240 and the front wheel linking part 630.

As an example, the ends of the first rotating shaft 210 provided with the rear wheel parts 130 are arranged to penetrate the hub 650, and the rear wheel linking part 620 is coupled to the outer surface of the hub 650. Thereby, the ends of the first rotating shaft 210 provided with the rear wheel parts 130 may be connected with the rear wheel linking part 620. In the similar way, the second rotating shaft 240 may be connected with the front wheel linking part 630 via the hub 650.

The rear wheel linking part 620 may comprise a first link 621 connected between one side of the first rotating shaft 210 and the first steering frame 641, and a second link 622 connected between the other side of the first rotating shaft 210 and the first steering frame 641.

The front wheel linking part 630 may comprise a third link 631 connected between one side of the second rotating shaft 240 and the second steering frame 642, and a fourth link 632 connected between the other side of the second rotating shaft 240 and the second steering frame 642.

Here, the first steering frame 641 to which the first and second links 621, 622 are connected is disposed in the rear of the lower portion of the load plate 110, and the second steering frame 642 to which the third and fourth links 631, 632 are connected is disposed in the front of the lower portion of the load plate 110. The first steering frame 641 may be connected with the second steering frame 642 via the steering link 643.

The front end of the first steering frame 641 and the rear end of the second steering frame 642 may be rotatably shaft-fixed to the lower portion of the load plate 110.

Referring to Fig. 19, as an example, when a worker turns the steering handle 610 to the right while holding the steering handle 610 and driving the trolley 100, the rear end of the first steering frame 641 coupled to the steering handle 610 is turned to the right, and accordingly the front end of the first steering frame 641 is turned to the left. Thereby, the first and second links 621, 622 may be operated, and the first and second links 621, 622 may change the traveling direction of a pair of rear wheel parts 130 connected via the hub 650 to the left.

Simultaneously, the steering link 643 connected to the first steering frame 641 turns the rear end of the second steering frame 642 to the left. Thereby, the third and fourth links 631, 632 connected to the second steering frame 642 may be operated, and the third and fourth links 631, 632 may change the traveling direction of a pair of front wheel parts 120 connected via the hub 650 to the right.

Accordingly, when the steering handle 610 is turned to the right, the traveling direction of the rear wheel part 130 is changed to the left, and the traveling direction of the front wheel part 120 is changed to the right. Thereby, the trolley 100 may naturally curve and travel in the right direction.

The trolley 100 of the present embodiment may change the directions of the front wheel parts 120 and rear wheel parts 130 simultaneously by the steering handle 610, enabling to change the traveling direction of the trolley 100 with the minimum traveling radius.

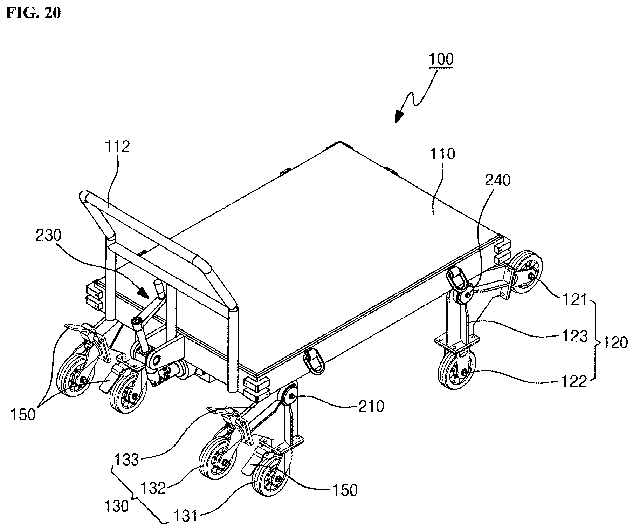

Fig. 20 illustrates another example of the direction change structure in the trolley 100 according to an embodiment of the present invention.

Referring to Fig. 20, the trolley 100 of the present embodiment may easily change the direction through a swivel wheel structure provided in the third and fourth wheels 131, 132 of the rear wheel part 130, during traveling.

In particular, the rear wheel part 130 may have a direction fixing device 150 for fixing the swivel direction of the third wheel 131 and fourth wheel 132 rotating around the rear wheel support 133 as the axis by the swivel wheel structure.

For example, when the swivel direction of the third and fourth wheels 131, 132 of the rear wheel part 130 is not fixed and the third wheel 131 or fourth wheel 132 is supported on the ground according to the rotation of the first rotating shaft 210, even a slight dislocation of the direction of the wheels may disturb the rolling motion, and unreasonable force exerted may damage the wheels.

A worker may fix the swivel directions of the third and fourth wheels 131, 132 by stepping the direction fixing device 150 provided in the third and fourth wheels 131, 132 of the rear wheel part 130, and thereafter operate the front wheel part 120 and rear wheel part 130 by rotating the first and second rotating shafts 210, 240 through the actuation member 200. Thereby, the rolling motion of the wheels may be easily performed during the obstacle crossing, and at the same time, the damage of the wheels may be prevented.

As described above, the trolley 100, 100' according to an embodiment of the present invention may operatively connect the front wheel part 120 and rear wheel part 130 by simple operation, such that the rear wheel part 130 may smoothly cross obstacles after the front wheel part 120 crosses the obstacles, thereby carrying an object while easily crossing obstacles such as coaming members 20 or doorsills 40 in the hull, without being disturbed.

Also, the offshore structure 1000 according to an embodiment of the present invention has, in the hull, a trolley 100, 100' capable of smoothly crossing a coaming member 20 fixedly installed on the deck 10 or a doorsill 40 in an entrance of an enclosed area 30 without installing inclined ramps or lifting hoists, thereby safely carrying an object to a destination in the hull.

Also, thanks to the trolley 100 capable of easily crossing obstacles such as coaming members 20 or doorsills 40, a coaming member 20 may be installed on the deck 10 in a fixed manner, thereby effectively inhibiting the dispersion of fluids, and a doorsill 40 in an entrance of an enclosed area 30 may be kept, thereby easily controlling a positive or negative pressure in the enclosed area 30.

The embodiments of the present invention disclosed in the present specification and drawings are merely illustrative examples of the present invention to easily explain the technical disclosure of the present invention and facilitate understanding of the present invention, and are not intended to limit the scope of the present invention. The scope of the invention is only defined by the claims.

### Industrial Applicability

The trolley according to an embodiment of the present invention may operate a front wheel part and a rear part wheel by simple operation, without installing inclined ramps or lifting hoists for crossing obstacles, to smoothly cross obstacles on the ground without being disturbed, thereby being easily applied to an offshore structure having a plurality of coaming members and doorsills and being effectively used in the overall construction industry in which a trolley is used.

## Claims

1. A trolley (1) for smoothly crossing obstacles comprising:
a load plate (110) on which an object is loaded;
a front wheel part (120) including a front wheel support (123) shaft-coupled to the front of the lower portion of the load plate (110), and a pair of wheels (121, 122) provided at both ends of the front wheel support (123), respectively, to rotate along the rotational radius of the shaft such that each wheel of the pair of wheels is selectively seated on the ground and driven, while traveling;
a rear wheel part (130) including a rear wheel support (133) shaft-coupled to the rear of the lower portion of the load plate (110), and a pair of wheels (131, 132) provided at both ends of the rear wheel support (133), respectively, to rotate along the rotational radius of the shaft such that each wheel of the pair of wheels is selectively seated on the ground and driven, while traveling; and
an actuation member (200) operatively connecting the pair of wheels (121, 122) of the front wheel part (120) and the pair of wheels (131, 132) of the rear wheel part (130) to be aligned with each other through a gear coupling structure and **characterized by** the actuation member (200) adapted to adjust the position of at least one of the pair of wheels (121, 122) of the front wheel part (120) to smoothly overcome the obstacle.

2. The trolley (1) of claim 1, further comprising:
a movement auxiliary member (300) between the load plate (110) and the front wheel part (120),
wherein the movement auxiliary member (300) includes:
a pinion gear (320) provided in the shaft of the front wheel part (120) and operatively connected with the actuation member (200); and
a rack gear (310) provided in the lower portion of the load plate (110) and engaged with the pinion gear (320) to move the load plate (110) forward or backward by a certain distance according to the rotation of the pinion gear (320),
wherein the pinion gear (320) rotates in the clockwise or counterclockwise direction according to the operation of the actuation member (200), to move the load plate (110) forward by a certain distance when the front wheel part (120) crosses objects, and move the load plate (110) backward by a certain distance when the rear wheel part (130) crosses objects.

3. The trolley (1) of claim 1, wherein the actuation member (200) includes:
an operation part (230) operating in a manual mode with a handle (232) or in an electric mode with a motor.

4. The trolley (1) of claim 1, wherein the actuation member (200) includes:
a first gear part (220) provided in the shaft of the rear wheel part (130);
an operation part (230) connected with the first gear part (220) to rotate the first gear part (220);
a second gear part (250) provided in the shaft of the front wheel part (120); and
a shaft member (260) transmitting the rotary power of the first gear part (220) to the second gear part (250).

5. The trolley (1) of claim 4, wherein the first gear part (220) includes:
a first bevel gear (221) provided in the shaft of the rear wheel part (130);
a second bevel gear (222) engaged with the first bevel gear (221) and connected with the operation part; and
a third bevel gear (223) engaged with the first bevel gear (221) and connected with the shaft member (260), and
wherein the second gear part (250) includes:
a fourth bevel gear (251) provided in the shaft of the front wheel part (120); and
a fifth bevel gear (252) engaged with the fourth bevel gear (251) and connected with the shaft member (260).

6. The trolley (1) of claim 1, wherein the actuation member (200) includes:
a first worm gear (420) provided in the shaft of the rear wheel part (130);
an operation part (230) connected with the first worm gear (420) to rotate the first worm gear (420);
a second worm gear (450) provided in the shaft of the front wheel part (120); and
a shaft member (260) transmitting the rotary power of the first worm gear (420) to the second worm gear (450).

7. The trolley (1) of claim 6, wherein the first worm gear (420) includes:
a first worm wheel (421) provided in the shaft of the rear wheel part (130); and
a first worm (422) engaged with the first worm wheel (421), and one side of which is connected to the operation part (230) and the other side of which is connected to the shaft member (260), and
wherein the second worm gear (450) includes:
a second worm wheel (451) provided in the shaft of the front wheel part (120); and
a second worm (452) connected to the shaft member (260) and engaged with the second worm wheel (451).

8. The trolley (1) of claim 1, further comprising:
a steering member (600) connecting between the front wheel part (120) and the rear wheel part (130) through a linkage structure to change the traveling direction of the front wheel part (120) and rear wheel part (130) by operation of a handle (232).

9. The trolley (1) of claim 8, wherein the steering member (600) includes:
a steering handle (610) provided in the rear of the load plate (110);
a rear wheel linking part (620) coupled to the lower portion of the load plate (110) and connected with the shaft of the rear wheel part (130);
a front wheel linking part (630) coupled to the lower portion of the load plate (110) and connected with the shaft of the front wheel part (120); and
a steering linking part (640) connecting the steering handle (610), rear wheel linking part (620) and front wheel linking part (630), and operating the rear wheel linking part (620) and front wheel linking part (630) by operation of the steering handle (610) to change the traveling direction of the front wheel part (120) and rear wheel part (130).

10. The trolley (1) of claim 9, wherein the steering linking part (640) includes:
a first steering frame (641) formed integrally with the steering handle (610) and connected with the rear wheel linking part (620);
a second steering frame (642) connected with the front wheel linking part (630); and
a steering link (643) connected between the first steering frame (641) and the second steering frame (642),
wherein a hub (650) is provided in the shaft of the rear wheel part (130) and the shaft of the front wheel part (120) to connect each of the corresponding rear wheel linking part (620) and front wheel linking part (630), and
wherein in the hub (650), the shaft of the rear wheel part (130) or front wheel part (120) is penetrated, and the rear wheel linking part (620) or front wheel linking part (630) corresponding to the outer surface is coupled.

11. The trolley (1) of claim 1, further comprising:
a first wheel drive means (510) provided in the front wheel support (123) to rotate at least one of the pair of wheels (121, 122) of the front wheel part (120); and
a second wheel drive means (520) provided in the rear wheel support (133) to rotate at least one of the pair of wheels (131, 132) of the rear wheel part (130).

12. An offshore structure (1000) comprising:
a deck (10) on which an object is transported and installed;
at least one coaming member (20) fixedly installed on the deck (10) to inhibit the dispersion of fluids; and
a trolley (1) according to any one of the preceding claims passing the at least one coaming member (20) without using inclined ramps, and transporting the object to one region of the deck (10).

13. An offshore structure (1000) comprising:
an enclosed area (30) having a door for sealing the inside and a doorsill (40) of a predetermined height and selectively setting a positive or negative pressure thereinside; and
a trolley (1) according to any one of claims 1 to 11 passing the doorsill (40) without using inclined ramps, and transporting the object to one region in the enclosed area (30).

## Patentansprüche

1. Wagen (1) zum problemlosen Überqueren von Hindernissen, aufweisend:
eine Lastplatte (110), auf die ein Objekt geladen ist;
ein Vorderradteil (120) mit einem Vorderradträger (123), der mit der Vorderseite des unteren Bereichs der Lastplatte (110) Wellen-gekoppelt ist, und mit einem Paar von Rädern (121, 122) an beiden Enden des Vorderradträgers (123), die sich jeweils um den Drehradius der Welle derart drehen, dass jedes Rad des Paares von Rädern während der Fahrt selektiv auf dem Boden aufliegt und angetrieben wird;
ein Hinterradteil (130) mit einem Hinterradträger (133), der mit der Rückseite des unteren Bereichs der Lastplatte (110) Wellen-gekoppelt ist, und mit einem Paar von Rädern (131, 132) an beiden Enden des Hinterradträgers (133), die sich jeweils um den Drehradius der Welle derart drehen, dass jedes Rad des Paares von Rädern während der Fahrt selektiv auf dem Boden aufliegt und angetrieben wird; und
ein Betätigungselement (200), das das Paar der Räder (121, 122) des Vorderradteils (120) und das Paar der Räder (131, 132) des Hinterradteils (130) betriebsmäßig derart verbindet, dass diese über eine Getriebekopplungsstruktur miteinander ausgerichtet sind,
**dadurch gekennzeichnet, dass** das Betätigungselement (200) dazu ausgebildet ist, die Position von mindestens einem des Paares von Rädern (121, 122) des Vorderradteils (120) zum problemlosen Überwinden des Hindernisses einzustellen.

2. Wagen (1) nach Anspruch 1, ferner aufweisend:
ein Bewegungshilfselement (300) zwischen der Lastplatte (110) und dem Vorderradteil (120),
wobei das Bewegungshilfselement (300) aufweist:
ein an der Welle des Vorderradteils (120) vorgesehenes und mit dem Betätigungselement (200) betriebsmäßig verbundenes Ritzel (320); und
ein in dem unteren Bereich der Lastplatte (110) vorgesehenes Zahnstangenelement (310), das mit dem Ritzel (320) kämmt, um die Lastplatte (110) entsprechend der Drehung des Ritzels (320) um eine bestimmte Strecke nach vorne oder nach hinten zu bewegen,
wobei sich das Ritzel (320) je nach Betätigung des Betätigungselements (200) im Uhrzeigersinn oder gegen den Uhrzeigersinn dreht, um die Lastplatte (110) um eine bestimmte Strecke nach vorne zu bewegen, wenn das Vorderradteil (120) Objekte überquert, und die Lastplatte (110) um eine bestimmte Strecke nach hinten zu bewegen, wenn das Hinterradteil (130) Objekte überquert.

3. Wagen (1) nach Anspruch 1,
wobei das Betätigungselement (200) aufweist:
ein Betätigungsteil (230), das in einem manuellen Modus mit einem Handgriff (232) oder in einem elektrischen Modus mit einem Motor arbeitet.

4. Wagen (1) nach Anspruch 1,
wobei das Betätigungselement (200) aufweist:
ein erstes Getriebeteil (220), das an der Welle des Hinterradteils (130) vorgesehen ist;
ein Betätigungsteil (230), das mit dem ersten Getriebeteil (220) verbunden ist, um das erste Getriebeteil (220) zu drehen;
ein zweites Getriebeteil (250), das an der Welle des Vorderradteils (120) vorgesehen ist; und
ein Wellenelement (260), das die Drehkraft des ersten Getriebeteils (220) auf das zweite Getriebeteil (250) überträgt.

5. Wagen (1) nach Anspruch 4,
wobei das erste Getriebeteil (220) aufweist:
ein erstes Kegelrad (221), das an der Welle des Hinterradteils (130) vorgesehen ist;
ein zweites Kegelrad (222), das mit dem ersten Kegelrad (221) kämmt und mit dem Betätigungsteil verbunden ist; und
ein drittes Kegelrad (223), das mit dem ersten Kegelrad (221) kämmt und mit dem Wellenelement (260) verbunden ist, und
wobei das zweite Getriebeteil (250) aufweist:
ein viertes Kegelrad (251), das an der Welle des Vorderradteils (120) vorgesehen ist; und
ein fünftes Kegelrad (252), das mit dem vierten Kegelrad (251) kämmt und mit dem Wellenelement (260) verbunden ist.

6. Wagen (1) nach Anspruch 1,
wobei das Betätigungselement (200) aufweist:
ein erstes Schneckengetriebe (420), das an der Welle des Hinterradteils (130) vorgesehen ist;
ein Betätigungsteil (230), das mit dem ersten Schneckengetriebe (420) verbunden ist, um das erste Schneckengetriebe (420) zu drehen;
ein zweites Schneckengetriebe (450), das an der Welle des Vorderradteils (120) vorgesehen ist; und
ein Wellenelement (260), das die Drehkraft des ersten Schneckengetriebes (420) auf das zweite Schneckengetriebe (450) überträgt.

7. Wagen (1) nach Anspruch 6,
wobei das erste Schneckengetriebe (420) aufweist:
ein erstes Schneckenrad (421), das an der Welle des Hinterradteils (130) vorgesehen ist; und
eine erste Schnecke (422), die mit dem ersten Schneckenrad (421) kämmt und deren eine Seite mit dem Betätigungsteil (230) verbunden ist und deren andere Seite mit dem Wellenelement (260) verbunden ist, und
wobei das zweite Schneckengetriebe (450) aufweist:
ein zweites Schneckenrad (451), das an der Welle des Vorderradteils (120) vorgesehen ist; und
eine zweite Schnecke (452), die mit dem Wellenelement (260) verbunden ist und mit dem zweiten Schneckenrad (451) kämmt.

8. Wagen (1) nach Anspruch 1, ferner aufweisend:
ein Lenkelement (600), das das Vorderradteil (120) und das Hinterradteil (130) über eine Kopplungsstruktur verbindet, um die Fahrtrichtung des Vorderradteils (120) und des Hinterradteils (130) durch Betätigung eines Handgriffs (232) zu ändern.

9. Wagen (1) nach Anspruch 8,
wobei das Lenkelement (600) aufweist:
einen Lenkgriff (610), der rückseitig von der Lastplatte (110) vorgesehen ist;
ein Hinterrad-Kopplungsteil (620), das mit dem unteren Bereich der Lastplatte (110) gekoppelt ist und mit der Welle des Hinterradteils (130) verbunden ist;
ein Vorderrad-Kopplungsteil (630), das mit dem unteren Bereich der Lastplatte (110) gekoppelt ist und mit der Welle des Vorderradteils (120) verbunden ist; und
ein Lenkgestängeteil (640), das den Lenkhebel (610), das Hinterrad-Kopplungsteil (620) und das Vorderrad-Kopplungsteil (630) verbindet und das Hinterrad-Kopplungsteil (620) und das Vorderrad-Kopplungsteil (630) durch Betätigung des Lenkhebels (610) betätigt, um die Fahrtrichtung des Vorderradteils (120) und des Hinterradteils (130) zu ändern.

10. Wagen (1) nach Anspruch 9,
wobei das Lenkgestängeteil (640) aufweist:
einen ersten Lenkrahmen (641), der einstückig mit dem Lenkgriff (610) ausgebildet und mit dem Hinterrad-Kopplungsteil (620) verbunden ist;
einen zweiten Lenkrahmen (642), der mit dem Vorderrad-Kopplungsteil (630) verbunden ist; und
ein Lenkgestänge (643), das den ersten Lenkrahmen (641) und den zweiten Lenkrahmen (642) miteinander verbindet,
wobei eine Nabe (650) in der Welle des Hinterradteils (130) und der Welle des Vorderradteils (120) vorgesehen ist, um das jeweilige Hinterrad-Kopplungsteil (620) und Vorderrad-Kopplungsteil (630) miteinander zu verbinden, und wobei in der Nabe (650) die Welle des Hinterradteils (130) bzw. des Vorderradteils (120) durchsetzt ist und das der Außenfläche entsprechende Hinterrad-Kopplungsteil (620) bzw. Vorderrad-Kopplungsteil (630) gekoppelt ist.

11. Wagen (1) nach Anspruch 1,
der ferner Folgendes aufweist:
eine erste Radantriebseinrichtung (510), die an dem Vorderradträger (123) vorgesehen ist, um mindestens eines der beiden Räder (121, 122) des Vorderradteils (120) zu drehen; und
eine zweite Radantriebseinrichtung (520), die an dem Hinterradträger (133) vorgesehen ist, um mindestens eines der beiden Räder (131, 132) des Hinterradteils (130) zu drehen.

12. Offshore-Struktur (1000), aufweisend:
ein Deck (10), auf dem ein Objekt transportiert und installiert wird;
mindestens ein fest auf dem Deck (10) installiertes Süllrandelement (20) zum Verhindern der Verteilung von Flüssigkeiten; und
einen Wagen (1) nach einem der vorhergehenden Ansprüche, der das mindestens eine Süllrandelement (20) ohne Verwendung geneigter Rampen passiert und das Objekt in eine Region des Decks (10) transportiert.

13. Offshore-Struktur (100), aufweisend:
einen umschlossenen Raum (30) mit einer Tür zum Abdichten des Innenraums und mit einer Türschwelle (40) mit einer vorbestimmten Höhe, in dem wahlweise ein positiver oder negativer Druck erzeugt werden kann; und
einen Wagen (1) nach einem der Ansprüche 1 bis 11, der die Türschwelle (40) ohne Verwendung geneigter Rampen passiert und das Objekt in eine Region in dem umschlossenen Raum (30) transportiert.

## Revendications

1. Un chariot (1) pour traverser en douceur des obstacles comprenant :
une plaque de chargement (110) sur laquelle un objet est chargé ;
une partie roue avant (120) comprenant un support de roue avant (123) couplé par arbre à l'avant de la partie inférieure de la plaque de chargement (110), et une paire de roues (121, 122) fournies à chaque extrémité du support de roue avant (123), respectivement, pour tourner le long du rayon de rotation de l'arbre de telle sorte que chaque roue de la paire de roues soit sélectivement assise sur le sol et entraînée, pendant le déplacement ;
une partie roue arrière (130) comprenant un support de roue arrière (133) couplé par arbre à l'arrière de la partie inférieure de la plaque de chargement (110), et une paire de roues (131, 132) fournies à chaque extrémité du support de roue arrière (133), respectivement, pour tourner le long du rayon de rotation de l'arbre de telle sorte que chaque roue de la paire de roues soit sélectivement assise sur le sol et entraînée, pendant le déplacement ; et
un élément d'actionnement (200) reliant de manière fonctionnelle la paire de roues (121, 122) de la partie roue avant (120) et la paire de roues (131, 132) de la partie roue arrière (130) pour être alignées l'une avec l'autre par une structure d'accouplement par engrenage et **caractérisé par** l'élément d'actionnement (200) adapté pour ajuster la position d'au moins une des paires de roues (121, 122) de la partie roue avant (120) pour franchir en douceur l'obstacle.

2. Le chariot (1) de la revendication 1, comprenant en outre :
un élément auxiliaire de mouvement (300) entre la plaque de chargement (110) et la partie roue avant (120),
où l'élément auxiliaire de mouvement (300) comprend :
un pignon (320) fourni dans l'arbre de la partie roue avant (120) et connecté de manière fonctionnelle avec l'élément d'actionnement (200) ; et
une crémaillère (310) fournie dans la partie inférieure de la plaque de chargement (110) et engagée avec le pignon (320) pour déplacer la plaque de chargement (110) vers l'avant ou l'arrière d'une certaine distance en fonction de la rotation du pignon (320),
où le pignon (320) tourne dans le sens horaire ou antihoraire en fonction du fonctionnement de l'élément d'actionnement (200), pour déplacer la plaque de chargement (110) vers l'avant d'une certaine distance lorsque la partie roue avant (120) franchit des objets, et déplacer la plaque de chargement (110) vers l'arrière d'une certaine distance lorsque la partie roue arrière (130) franchit des objets.

3. Le chariot (1) selon la revendication 1, où l'élément d'actionnement (200) comprend :
une partie d'opération (230) fonctionnant en mode manuel avec une poignée (232) ou en mode électrique avec un moteur.

4. Le chariot (1) selon la revendication 1, où l'élément d'actionnement (200) comprend :
une première partie d'engrenage (220) fournie dans l'arbre de la partie roue arrière (130) ;
une partie d'opération (230) reliée à la première partie d'engrenage (220) pour tourner la première partie d'engrenage (220) ;
une deuxième partie d'engrenage (250) fournie dans l'arbre de la partie roue avant (120) ; et
un élément d'arbre (260) transmettant la puissance rotative de la première partie d'engrenage (220) à la deuxième partie d'engrenage (250).

5. Le chariot (1) de la revendication 4, où la première partie d'engrenage (220) comprend:
un premier engrenage conique (221) fourni dans l'arbre de la partie roue arrière (130);
un deuxième engrenage conique (222) engagé avec le premier engrenage conique (221) et connecté avec la partie d'opération (230); et
un troisième engrenage conique (223) engagé avec le premier engrenage conique (221) et connecté avec l'élément d'arbre (260), et
où la deuxième partie d'engrenage (250) comprend:
un quatrième engrenage conique (251) fourni dans l'arbre de la partie roue avant (120); et
un cinquième engrenage conique (252) engagé avec le quatrième engrenage conique (251) et connecté avec l'élément d'arbre (260).

6. Le chariot (1) de la revendication 1, où l'élément d'actionnement (200) comprend:
une première vis sans fin (420) fournie dans l'arbre de la partie roue arrière (130);
une partie d'opération (230) connectée avec la première vis sans fin (420) pour faire tourner la première vis sans fin (420);
une deuxième vis sans fin (450) fournie dans l'arbre de la partie roue avant (120); et
un élément d'arbre (260) transmettant la puissance rotative de la première vis sans fin (420) à la deuxième vis sans fin (450).

7. Le chariot (1) de la revendication 6, où la première vis sans fin (420) comprend:
une première roue de vis sans fin (421) fournie dans l'arbre de la partie roue arrière (130); et
une première vis (422) engagée avec la première roue de vis sans fin (421), dont un côté est connecté à la partie d'opération (230) et l'autre côté est connecté à l'élément d'arbre (260), et
où la deuxième vis sans fin (450) comprend:
une deuxième roue de vis sans fin (451) fournie dans l'arbre de la partie roue avant (120); et
une deuxième vis (452) connectée à l'élément d'arbre (260) et engagée avec la deuxième roue de vis sans fin (451).

8. Le chariot (1) de la revendication 1, comprenant en outre :
un élément de direction (600) reliant la partie roue avant (120) et la partie roue arrière (130) par une structure de liaison pour changer la direction de déplacement de la partie roue avant (120) et de la partie roue arrière (130) par l'action d'une poignée (232).

9. Le chariot (1) de la revendication 8, où l'élément de direction (600) comprend:
une poignée de direction (610) fournie à l'arrière de la plaque de chargement (110);
un élément de liaison roue arrière (620) couplé à la partie inférieure de la plaque de chargement (110) et connecté avec l'arbre de la partie roue arrière (130);
un élément de liaison roue avant (630) couplé à la partie inférieure de la plaque de chargement (110) et connecté avec l'arbre de la partie roue avant (120); et
un élément de liaison de direction (640) reliant la poignée de direction (610), l'élément de liaison roue arrière (620) et l'élément de liaison roue avant (630), et actionnant l'élément de liaison roue arrière (620) et l'élément de liaison roue avant (630) par l'action de la poignée de direction (610) pour changer la direction de déplacement de la partie roue avant (120) et de la partie roue arrière (130).

10. Le chariot (1) de la revendication 9, où l'élément de liaison de direction (640) comprend :
un premier cadre de direction (641) formé intégralement avec la poignée de direction (610) et connecté avec l'élément de liaison roue arrière (620);
un deuxième cadre de direction (642) connecté avec l'élément de liaison roue avant (630); et
un lien de direction (643) connecté entre le premier cadre de direction (641) et le deuxième cadre de direction (642),
où un moyeu (650) est fourni dans l'arbre de la partie roue arrière (130) et l'arbre de la partie roue avant (120) pour relier chacun des éléments de liaison roue arrière (620) et les éléments de liaison roue avant (630), et
où, dans le moyeu (650), l'arbre de la partie roue arrière (130) ou de la partie roue avant (120) est pénétré, et l'élément de liaison roue arrière (620) ou l'élément de liaison roue avant (630) correspondant à la surface extérieure est couplé.

11. Le chariot (1) de la revendication 1, comprenant en outre :
un premier moyen d'entraînement de roue (510) fourni dans le support de roue avant (123) pour faire tourner au moins une des paires de roues (121, 122) de la partie roue avant (120); et
un deuxième moyen d'entraînement de roue (520) fourni dans le support de roue arrière (133) pour faire tourner au moins une des paires de roues (131, 132) de la partie roue arrière (130).

12. Une structure offshore (1000) comprenant :
un pont (10) sur lequel un objet est transporté et installé ;
au moins un membre de surbau (20) installé de manière fixe sur le pont (10) pour inhiber la dispersion des fluides ; et
un chariot (1) selon l'une quelconque des revendications précédentes traversant le ou les membre(s) de surbau (20) sans utiliser de rampes inclinées, et transportant l'objet vers une région du pont (10).

13. Une structure offshore (1000) comprenant :
une zone fermée (30) ayant une porte pour sceller l'intérieur et un seuil de porte (40) d'une hauteur prédéterminée et réglant sélectivement une pression positive ou négative à l'intérieur ; et
un chariot (1) selon n'importe laquelle des revendications 1 à 11 traversant le seuil de porte (40) sans utiliser de rampes inclinées, et transportant l'objet vers une région de la zone fermée (30).
